# EUROPEAN PATENT SPECIFICATION

(11) **EP 4 325 358 B1**
(45) Date of publication and mention of the grant of the patent: **05.08.2026**
(21) Application number: 22788068.9
(22) Date of filing: 30.03.2022
(51) Int. Cl.: G06F 9/48, G06F 9/50, G06F 9/54, G06F 9/445

(54) **ARITHMETIC DEVICE, AND METHOD FOR OPERATING PROGRAM**
ARITHMETISCHE VORRICHTUNG UND VERFAHREN ZUM BETRIEB EINES PROGRAMMS
DISPOSITIF ARITHMÉTIQUE, ET PROCÉDÉ DESTINÉ À EXPLOITER UN PROGRAMME

(30) Priority: 16.04.2021 JP 2021069512
(43) Date of publication of application: 21.02.2024
(73) Proprietor: Hitachi, Ltd., Tokyo 100-8280 (JP)
(72) Inventor: KIM, Sungho, Tokyo 100-8280 (JP); OTSUKA, Yusaku, Tokyo 100-8280 (JP)
(74) Representative: Mewburn Ellis LLP
(86) International application number: PCT/JP2022/016279
(87) International publication number: WO 2022/220143

(56) References cited:
- JP-A- 2016 001 417
- JP-A- 2016 091 257
- JP-A- 2019 185 423
- JP-A- 2019 185 423
- JP-A- H06 332 724
- ANONYMOUS: "Preload - ArchWiki", 13 February 2021 (2021-02-13), pages 1 - 2, XP093252438, Retrieved from the Internet <URL:https://wiki.archlinux.org/index.php?title=Preload&oldid=652237> [retrieved on 20250220]
- ANONYMOUS: "ARM big.LITTLE - Wikipedia", 1 January 2021 (2021-01-01), pages 1 - 6, XP093252620, Retrieved from the Internet <URL:https://en.wikipedia.org/w/index.php?title=ARM_big.LITTLE&oldid=997732897> [retrieved on 20250220]
- TABATA TOSHIHIRO, HIDEO TANIGUCHI: "Fast Process Creation and Disappearance by Recycling Process Elements", IPSJ SIG TECHNICAL REPORTS, INFORMATION PROCESSING SOCIETY OF JAPAN, JP, vol. 98, no. 33 (98-OS-78-11), 8 May 1998 (1998-05-08), JP , pages 79 - 86, XP055976960, ISSN: 0919-6072

## Description

### Technical Field

The present invention relates to an arithmetic apparatus and a program operating method.

### Background Art

A real-time OS is preferred in the industrial field because it can run a program within a certain period of time. On the other hand, since the real-time OS has restrictions, there is a demand for a general-purpose OS to operate a program within a certain period of time. Patent Document 1 discloses an RTOS simulation method that realizes a real-time OS (RTOS) on a general-purpose development machine such as a workstation (WS) or a PC by using a general-purpose OS such as UNIX (registered trademark) or Windows (registered trademark). The RTOS simulation method includes, in order to realize time management of the RTOS by efficiently and selectively using a timer function that periodically generates signals at specified time intervals on the basis of the real time of the general-purpose OS (real-time timer function) and a timer function that periodically generates signals at specified time intervals on the basis of a CPU allocation time period for a process (process relative time timer function), a start-up time timer setting step of setting a signal to be generated at regular time intervals on the basis of the CPU allocation time period by using the process relative time timer function when the RTOS is started; a timer switching execution determination step of determining, when a user task issues a system call that involves a transition to a WAITING state or a SUSPENDED state which waits for some event to occur, whether or not a task switch that occurs is a task switch from a normal user task to a special task that means an idle state (idle task); a timer switching step of stopping, when it is determined in the timer switching execution determination step that the task switch is a task switch from a normal user task to an idle task, the timer function having been activated and setting a signal to be generated at regular intervals on the basis of the real time by using the real-time timer function; a second timer switching execution determination step of determining, after each interrupt handler processing is completed when a signal is generated, whether or not a task switch is necessary and whether or not the task switch is a task switch from an idle task to a normal user task; and a second timer switching step of stopping, when it is determined in the second timer switching execution determination step that a task switch is necessary and that the task switch is a task switch from an idle task to a normal user task, the timer function having been activated and setting a signal to be generated at regular time intervals by using the process relative time timer function on the basis of the CPU allocation time period.

### Prior Art Documents

### Patent Document

Patent Document 1: JP-2006-163983-A
Patent Document 2: JP-2019-185423-A

Patent Document 2 relates to an application execution platform which: generates a common library that functionalizes an application and stores it as a functionalized application; generates and pools threads that execute functionalized applications in advance; receives an application start request from a user; associates an execution target application for which a start request has been made with a free thread selected from among the pooled threads, and uses the associated free thread to execute the functionalized application on the common library corresponding to the application to be executed.

### Summary of the Invention

### Problem to be Solved by the Invention

In the invention described in Patent Document 2, there is room for improvement in processing at the time of program startup.

### Means for Solving the Problem

An arithmetic apparatus according to a first aspect of the present invention is set forth in claims 1.

A program operating method according to a second aspect of the present invention is set forth in claim 5. Advantages of the Invention

According to the present invention, processing by a program can be started quickly.

### Brief Description of the Drawings

FIG. 1 is a hardware configuration diagram of an arithmetic apparatus.
FIG. 2 is a diagram illustrating information stored in a storage device in a first embodiment.
FIG. 3 is a diagram illustrating an example of a management table.
FIG. 4 is a diagram illustrating transitions of process states.
FIG. 5 is a flowchart illustrating an operation of a background program.
FIG. 6 is a flowchart illustrating details of step S350 in FIG. 5.
FIG. 7 is a flowchart illustrating details of step S360 in FIG. 5.
FIG. 8 is a flowchart illustrating details of step S370 in FIG. 5.
FIG. 9 is a flowchart representing an operation of a temporary process.
FIG. 10 is a flowchart illustrating termination processing of a management program.
FIG. 11 is a diagram illustrating a display result of a process state in a modification example.
FIG. 12 is a diagram illustrating information stored in the storage device in a second embodiment.

### Modes for Carrying Out the Invention

### -First Embodiment-

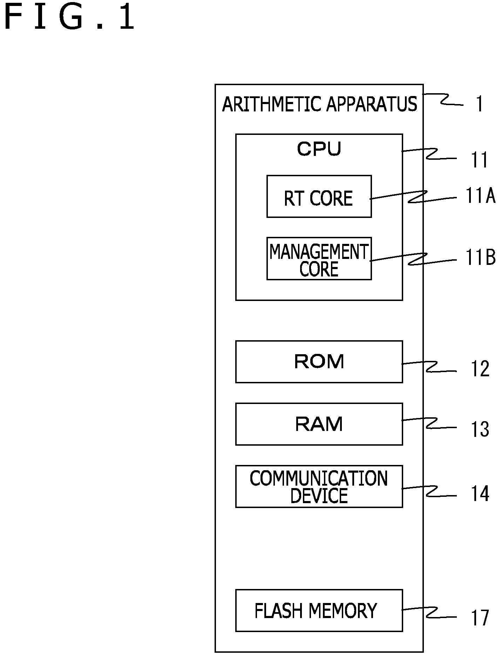

A first embodiment of an arithmetic apparatus will be described below with reference to FIGS. 1 to 10.

FIG. 1 is a hardware configuration diagram of an arithmetic apparatus 1. The arithmetic apparatus 1 includes a CPU 11 that is a central processing unit, a ROM 12 that is a read-only storage area, a RAM 13 that is capable of high-speed reading and writing, a communication device 14 that communicates with an outside of the arithmetic apparatus 1, and a storage device 17 which is a non-volatile storage device. The CPU 11 has a plurality of operation cores including an RT core 11A and a management core 11B. The CPU 11 may be single hardware having a plurality of operation cores or may be a plurality of pieces of hardware each having a single operation core.

The ROM 12 is a mask ROM, an EPROM (Erasable Programmable Read Only Memory), or an EEPROM (Electric Erasable Programmable ROM), for example. The RAM 13 is a DRAM (Dynamic RAM), for example. The communication device 14 is a communication module compatible with IEEE802.3 or a wireless communication module compatible with IEEE802.11, for example. The storage device 17 is a flash memory or a hard disk drive, for example.

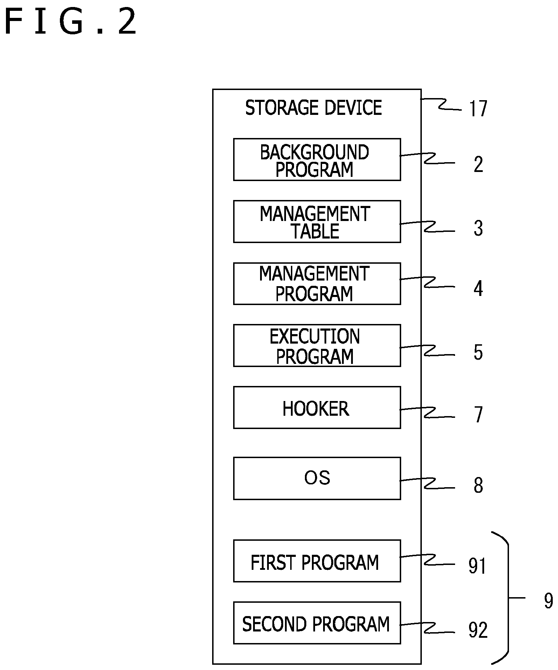

FIG. 2 is a diagram illustrating information stored in the storage device 17. Note that it is not essential for all the information described below to be stored in the storage device 17, and part of it may be stored in the ROM 12. The storage device 17 stores a background program 2, a management table 3, a management program 4, an execution program 5, a hooker 7, an OS 8, a first program 91, and a second program 92. Hereinafter, the first program 91 and the second program 92 are also collectively referred to as a management object program 9. The background program 2, the management program 4, the execution program 5, the hooker 7, the OS 8, the first program 91, and the second program 92 are developed in the RAM 13 and executed by the CPU 11.

In the present embodiment, the processing related to activation and termination of the management object program 9 will mainly be described, so that the management object program 9 and the execution program 5 will be described in units of processes, instead of programs. The background program 2, the management program 4, and the OS 8 do not terminate within the scope of the description of the present embodiment, so that their processes will not particularly be described.

The OS 8 is an operating system and may or may not have real-time effectiveness. That is, the OS 8 may be a real-time OS or a non-real-time OS. The management table 3 stores information related to the first program 91 and the second program 92, which are the management object programs 9 whose operations are managed by the background program 2. A detailed configuration of the management table 3 will be described later.

The management object programs 9, that is, the first program 91 and the second program 92, are required to operate periodically within a predetermined time interval. In the present embodiment, a periodic operation within a predetermined time interval is called a "real-time operation." Further, each of the management object programs 9 is not always activated, but repeatedly activated and terminated. Further, for each of the management object programs 9, a plurality of management object programs cannot operate at the same time for the purpose of ensuring the consistency of the system. Note that, while two programs are included in the management object program 9 in the present embodiment, the number of the management object programs 9 may be one or three or more. The management object program 9 is executed in the RT core 11A or the management core 11B as will be described later.

The background program 2 is a program that always runs in the arithmetic apparatus 1, that is, what is generally called a "daemon" or a "service." The background program 2 operates based on the information described in the management table 3. The management program 4 is middleware or a library and processes system calls related to the management object program 9. The background program 2 and the management program 4 realize the real-time operation of the management object program 9 in the OS 4 which does not have real-time effectiveness. The background program 2 is always executed in the management core 11B.

The process of the execution program 5 is generated by the background program 2 and executes the first program 91 or the second program 92 on the basis of instructions from the background program 2. Since the process of the execution program 5 is provisionally generated for the purpose of executing the first program 91 or the second program 92, the process of the execution program 5 is hereinafter also referred to as a "temporary process." The background program 2 uses a system call "fork" of the OS 8 to generate the process of the execution program 5, but the system call "fork" is not used for the execution of the first program 91 or the second program 92 by the execution program 5. Details will be described later.

The hooker 7 is a library that hooks reading from each application to the OS 8. To be specific, the hooker 7 changes a system call into a call to the management program 4 by symbol wrapping. The hooker 7 calls the management program 4 by hooking at least Fork, Exit, and Abort. The management program 4 performs special processing to be described later only when the target of Fork, Exit, and Abort is the management object program 9, and issues a system call to the OS 8 when the target is another program.

### (Management Table)

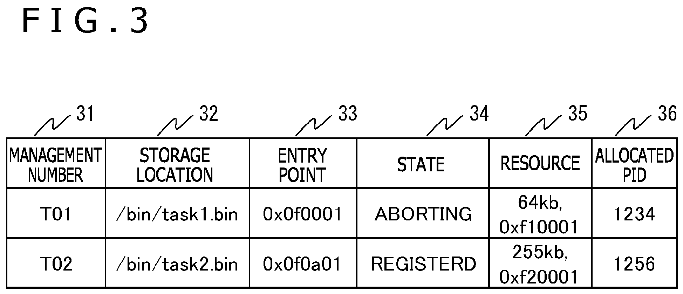

FIG. 3 is a diagram illustrating an example of the management table 3. The management table 3 includes a plurality of records, each of which has fields of a management number 31, a storage location 32, an entry point 33, a state 34, a resource 35, and an allocated PID 36. When the arithmetic apparatus 1 is not operating, only fields for the management number 31 and the storage location 32 are listed in the management table 3. Alternatively, even if some information is stored in other fields of the management table 3, the information of the entry point 33, the state 34, the resource 35, and the allocated PID 36 are deleted by initialization processing when the arithmetic apparatus 1 is started.

The management number 31 stores an identifier of a program whose operation is managed by the background program 2. The storage location 32 stores information regarding a location where the program is stored, in other words, an absolute path of the program. In the example illustrated in FIG. 3, "task1.bin" is for the first program 91, and "task2.bin" is for the second program 92, for example. The entry point 33 stores a location in the RAM 13 at which the operation of the program is started, which is an address in the RAM 13 in which the program is stored. The location in the RAM 13 at which the operation of the program is started is a location where a code corresponding to a main function of C language is stored, for example. Note that, in the case where this program has not yet been stored in the RAM, no location is entered in the entry point.

The state 34 stores information indicating a state of the program. The resource 35 stores information regarding a resource allocated to the program, specifically, information regarding a size of the RAM 13 and a starting location in the RAM 13. The allocated PID 36 stores a process ID of the process of the execution program 5 that runs the program of that record, in other words, a process ID of the temporary process corresponding to that program. Note that, in the case where the temporary process for running the program of that record has not yet been determined, the allocated PID 36 is blank.

The first record illustrated in FIG. 3 will be specifically described. This first record indicates that the program with the management number "T1" is stored in the absolute path "/bin/task1.bin," this program has already been stored in the RAM 13, and the entry point is "0x0f0001." Further, it is also indicated that the current state is "ABORTING," the RAM 13 allocated to this program is a "64 kb" area starting from "0xf10001," and the program corresponds to a temporary process whose process ID is "1234."

### (Process State)

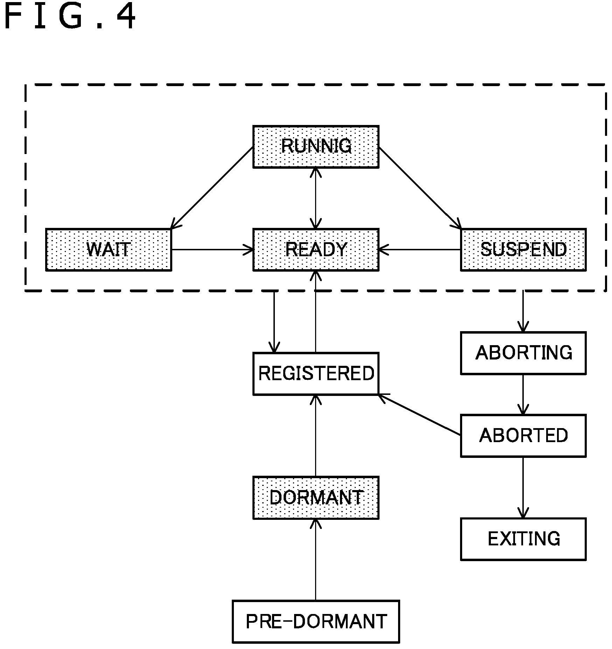

FIG. 4 is a diagram illustrating process state transitions in the present embodiment. The management program 4 manages the process of the execution program 5 as any of the following states. Among the states illustrated in FIG. 4, DORMANT, READY, RUNNNIG, WAIT, and SUSPEND indicated by light hatching are states in general process management, and in addition to these, the present embodiment adds states of PRE-DORMANT, REGISTERTED, ABORTING, ABORTED, and EXITING. Here, the states added in the present embodiment will mainly be described.

PRE-DORMANT is an initial state when a temporary process is generated. The state is changed from PRE-DORMANT to DORMANT. The state then transitions from the DORMANT state to a REGISTERED state. The REGISTERED state is a state in which the temporary process is ready to execute the management object program 9. The temporary process waits in the REGISTERED state, and transitions to the READY state when an instruction to start the corresponding management object program 9 issued. Further, from any of the states of READY, RUNNNIG, WAIT, and SUSPEND, the state returns to the state of REGISTERD due to a system call of "_EXIT."

Descriptions of the READY, RUNNNIG, WAIT, and SUSPEND states are omitted. From each state of READY, RUNNNIG, WAIT, and SUSPEND, a system call of "_EXIT" makes a transition to the REGISTERD state, and a system call of "_ABORT" makes a transition to the ABORTING state. A transition is made from the ABORTING state to the ABORTED state. The state transitions from the ABORTED state to the EXITING and REGISTERED states.

### (Outline of Operation)

The background program 2 generates a plurality of temporary processes that are processes of the execution program 5. The state of the temporary process at this time is PRE-DORMANT. Next, the background program 2 secures resources, and reads each piece of binary data described in the management table 3 into the RAM 13, thereby registering the entry point of each piece of binary data in the entry point 33 of the management table 3 to make a transition to the REGISTERD state. The background program 2 performs activation processing, termination processing, and generation processing in accordance with occurrence of an event. Details will be described later.

When the management object program 9 is activated under the environment of the OS 8, the hooker 7 transmits "_Fork" instead of the system call "Fork" to the management program 4 which is middleware. The management program 4 changes the state of the temporary process corresponding to the management object program 9, which is the target of "_Fork," from "REGISTERD" to "READY", and calls the entry point in the temporary process to start execution of the management object program 9 which is the target of "_Fork."

When the execution of the management object program 9 is started, the temporary process secures resources for the management object program 9, and further, when the management object program 9 executes a command to secure resources, the management program 4 hooks this call and allocates a part of the area of the RAM 13 secured by the background program 2. At this time, the background program 2 writes the allocated size of the RAM 13 and the starting location in the RAM 13 in the resource 35 of the management table 3.

When the temporary process outputs a system call "EXIT" when terminating the processing, the hooker 7 receives the system call and outputs "_EXIT" to the management program 4. The management program 4 first moves the temporary process that has output "EXIT," from the RT core 11A to the management core 11B, and makes a transition of the state of the temporary process to "ABORTING." Next, the management program 4 releases the resources for the management object program 9 used by the temporary process and changes the state of the temporary process to "ABORTED." The management program 4 then outputs a system call for terminating the temporary process to the OS 8, and makes the transition of the state of the temporary process to "EXITING." Incidentally, when another process outputs a system call "ABORT" to the temporary process, processing similar to above is performed.

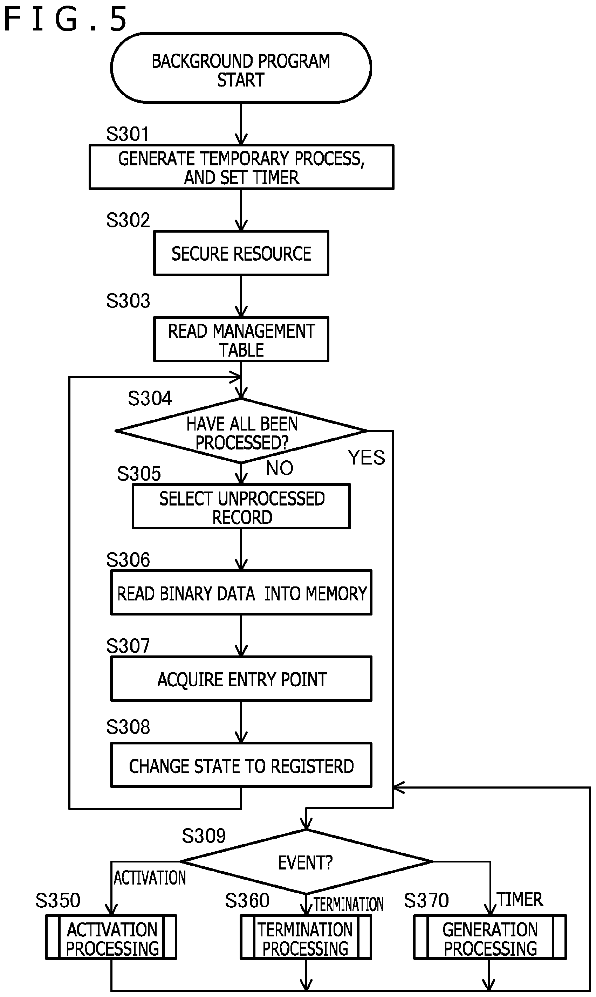

FIG. 5 is a flowchart illustrating an operation of the background program 2. As described above, the background program 2 is executed in the management core 11B. The background program 2 first forks the background program 2 itself in step S301 to generate a plurality of processes of the execution program 5, that is, temporary processes, and further sets a timer for generating a timer event after a predetermined period of time.

The reason why not only one process but a plurality of processes are generated here is that not only there are a plurality of management object programs 9, but also the processes are necessary when the management object programs 9 repeat ending and starting in a short period of time. In addition, the background program 2 is running in the management core 11B as described above, and the generated temporary processes are also running in the management core 11B.

In subsequent step S302, the background program 2 secures resources, that is, secures a memory area. This resource securing is realized by a system call to the OS 8. Hereinbelow, the area of the RAM 13 secured in this step is also referred to as a "management area."

In subsequent step S303, the background program 2 reads the management table 3. In the subsequent step S304, the background program 2 determines whether or not all records of the management table 3 read in step S303 have been processed. If the background program 2 determines that all records have been processed, the program proceeds to step S309, and proceeds to step S305 if the program determines that there are unprocessed records.

At step S305, the background program 2 selects one unprocessed record that is included in the management table 3 and that has been read at step S303. In subsequent step S306, the background program 2 reads the binary data indicated in the storage location 32 of the record selected in step S305 into the memory area secured in step S303. In subsequent step S307, the background program 2 acquires the address of the entry point of the binary data read into the memory in step S306 and records the address in the management table 3. In subsequent step S308, the background program 2 changes the state 34 of the record to be processed in the management table 3 to "REGISTERD."

In step S309, which is executed when an affirmative determination is made in step S304, the background program 2 waits for the occurrence of an event, and proceeds to one of steps S350, S360, and S370 depending on the event that has occurred. To be specific, the background program 2 proceeds to step S350 when determining that a start event has occurred, proceeds to step S360 when determining that an end event has occurred, and proceeds to step S370 when determining that a timer event has occurred. When any of steps S350, S360, and S370 is finished, the background program 2 returns to step S309. The above is the description for FIG. 5.

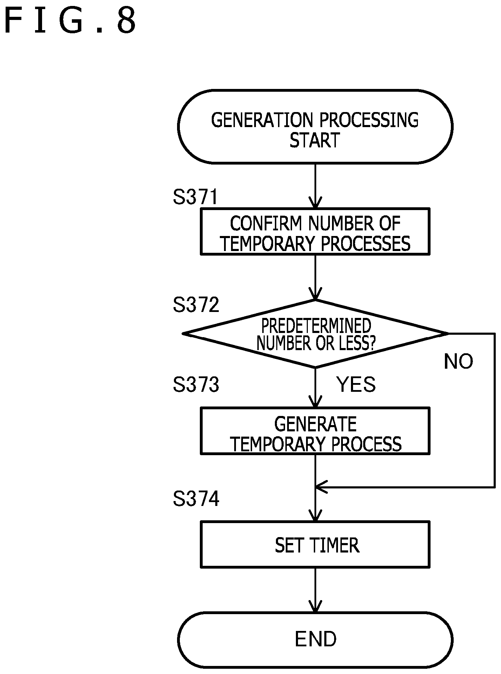

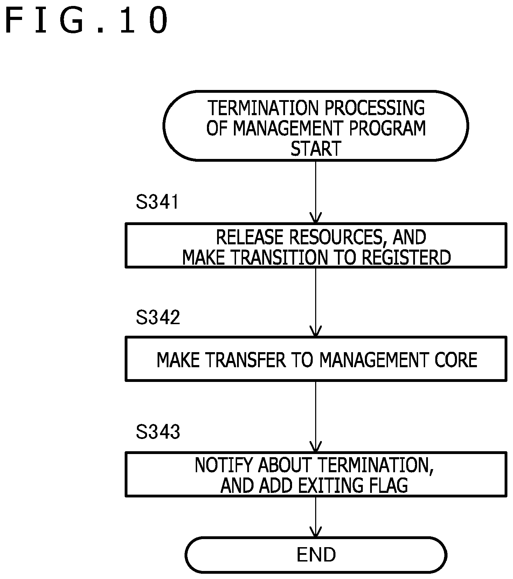

Note that the start event is generated by the hooker 7 hooking the activation processing of the management object program 9. The end event is generated by the processing of step S343 in FIG. 10, which will be described later. The timer event is generated when a predetermined time elapses by the timer set in step S301 or step S374 in FIG. 8, which will be described later.

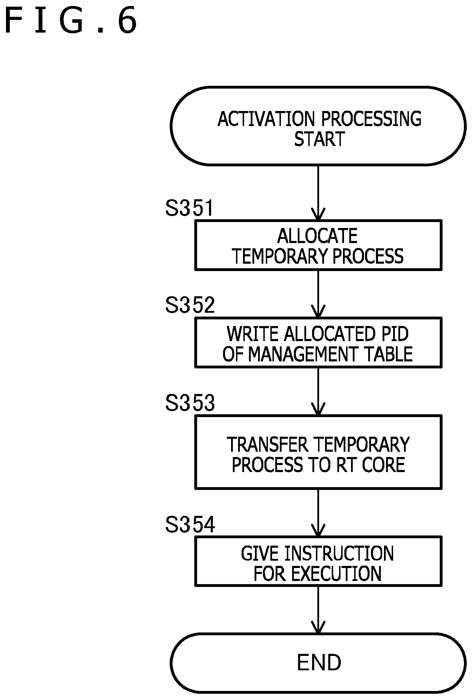

FIG. 6 is a flowchart illustrating the details of step S350 in FIG. 5, namely, the activation processing. In step S351, the background program 2 allocates any of the temporary processes that have already been generated, to the management object program 9 for which a start instruction has been issued. In subsequent step S352, the background program 2 writes the process ID of the temporary process allocated in step S351, in the allocated PID 36 of the management table 3. For example, when a start instruction has been issued for "task2.bin" and the process ID of the allocated temporary process is "1256," writing is given in the management table 3 as in the example of FIG. 3.

In subsequent step S353, the background program 2 transfers the temporary process allocated in step S351, to the RT core 11A. In subsequent step S354, the background program 2 issues an instruction to execute the temporary process moved to the RT core 11A in step S353, from the entry point, and terminates the processing illustrated in FIG. 6.

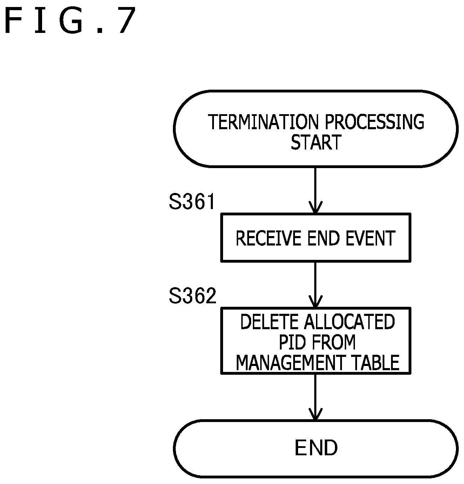

FIG. 7 is a flowchart illustrating the details of step S360 in FIG. 5, namely, the termination processing. First, in step S361, the background program 2 receives a signal indicating an end event. This signal includes information identifying the program to be terminated, such as the name of the program or the process ID. In subsequent step S362, the background program 2 deletes the value of the allocated PID 36 in the record of the corresponding program from the management table 3, and terminates the processing illustrated in FIG. 7.

FIG. 8 is a flowchart illustrating the details of step S370 in FIG. 5, namely, the generation processing. First, in step S371, the background program 2 confirms the number of generated temporary processes. In subsequent step S372, the background program 2 determines whether or not the number of temporary processes confirmed in step S371 is equal to or smaller than a predetermined number such as 10. When determining that the number of temporary processes is equal to or smaller than the predetermined number, the background program 2 proceeds to step S373, and when determining that the number of temporary processes is greater than the predetermined number, the background program 2 proceeds to step S374.

In step S373, the background program 2 generates one or more temporary processes, and proceeds to step S374. In step S374, the background program 2 sets a timer for generating a timer event after a predetermined period of time, and ends the processing illustrated in FIG. 8.

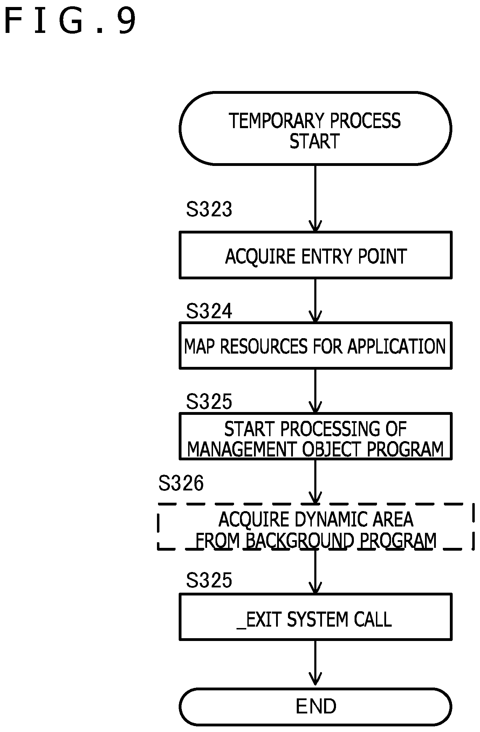

FIG. 9 is a flowchart illustrating an operation of the temporary process generated in step S301 of FIG. 5 or step S373 of FIG. 8. The temporary process starts its operation when it receives an instruction from the background program 2 in step S354 of FIG. 6. First, in step S323, the temporary process refers to the management table 3 and acquires an entry point to be read by the temporary process itself. To be specific, the temporary process identifies a record in which its own process number is described in the allocated PID 36 of the management table 3, and acquires the address of the entry point 33 of that record. In the following step S324, the temporary process maps resources for the application, which represent a memory area previously acquired by the background program 2. For this processing, a mmap command of Linux (registered trademark) can be used, for example.

In subsequent step S325, the temporary process starts processing of the management object program 9. To be specific, the temporary process starts the processing from the entry point obtained in step S323. If the processing of the management object program 9 started in step S325 includes dynamic area securing processing, step S326 is executed. In step S326, the temporary process acquires a dynamic area from the background program 2 instead of from the OS 8. When all processing of the management object program 9 is completed, the temporary process outputs "_EXIT," which is processed by the management program 4, instead of the standard system call "EXIT," and terminates the processing.

FIG. 10 is a flowchart illustrating termination processing executed when the management program 4 receives a system call "_EXIT" or "_ABORT." In S341, the management program 4 identifies the process that has output "_EXIT" or the process targeted by "_ABORT," releases the resources of the identified process (hereinafter referred to as the "suspended process"), and makes the transition of the state of the suspended process to "REGISTERD." The released resources are resources for the application in S324 of FIG. 9 and the dynamic area acquired in step S326.

In subsequent step S342, the management program 4 transfers the suspended process from the RT core 11A to the management core 11B. In subsequent step S343, the management program 4 notifies the background program 2 of the occurrence of the end event, adds an "EXITING" flag to the state of the temporary process, and then ends the processing illustrated in FIG. 10.

It should be noted that, when the processing of step S341 is completed, the resources used by the suspended process have already been released, and hence, can be allocated to another temporary process. Therefore, the process of the management object program 9 can newly be started without waiting for the termination processing of the suspended process by the OS 8, which is performed after the execution of step S343. In other words, the time period from when "_EXIT" or "_ABORT" is issued until when the process of the same management object program 9 can be started is shortened.

According to the first embodiment described above, the following effects can be obtained.
(1) The arithmetic apparatus 1 includes the RAM 13 which is a memory capable of reading and writing at high speed, the storage device 17 for storing the OS 4, the management object program 9 that cannot be started simultaneously with another management object program, the background program 2 that executes the management object program 9, and the management program 4 that manages the management object program 9, and the CPU 11 for executing the OS 8, the management object program 9, the background program 2, and the management program 4. The background program 2 generates one or more temporary processes by the OS 8, stores the management object program 9 in the RAM 13, selects a selection process that is one of the temporary processes, and associates the selection process with the management object program 9 stored in the RAM 13. When receiving a command to start the management object program 9, the management program 4 does not generate a new process but runs the management object program associated with the selection process. Therefore, since a temporary process is generated in advance and resource management by the OS 8 is completed before activation of the management object program 9 is supported, processing by the management object program 9 can be started quickly.
(2) The background program 2 secures a management area, which is an area in the RAM 13. The temporary process further acquires a part of the management area in dynamic memory securing processing in the management object program 9 (S323 and S326 in FIG. 9). Therefore, resources for the management object program 9 can be managed independently of the OS 8.
(3) The management program 4 recovers the management area from the selection process running the management object program 9, on the basis of a termination command of the management object program 9, that is, "_EXIT" or "_ABORT" (step S342 in FIG. 10), and then causes the OS to terminate the selection process. Therefore, even if the termination of the selection process by the OS is not completed, the resources for the management object program 9 used by the selection process can be used by the next temporary process.
(4) The CPU 11 has a plurality of cores. In the CPU 11, the management object program 9 is executed in the RT core 11A, and the generation processing of the temporary process by the background program 2 is executed in the management core 11B. Therefore, since the generation of the temporary process is executed in an arithmetic core different from that for the execution of the management object program 9, the generation of the temporary process does not adversely affect the real-time execution of the management object program 9.

### (Modification 1)

In the first embodiment described above, the CPU 11 has a plurality of cores. However, the CPU 11 may have only one arithmetic core. In this case, the management object program **9,** the background program **2,** and the management program 4 all operate in the same core, which inevitably affects the overall performance. However, even in this case, by applying the present invention, at least the advantage of capable of omitting the time for the OS 8 to secure resources as in the first embodiment can be obtained by generating a temporary process in advance before the management object program 9 is started. In addition, when the temporary process executing the management object program 9 is terminated, the resources for executing the management object program 9 are released first, so that, when the OS 8 is terminating the temporary process, the advantage of being able to allocate the resources for executing the management object program 9 to the next temporary process in parallel as in the first embodiment can also be obtained.

### (Modification 2)

In the first embodiment described above, the description is made as if the management object program 9 requires dynamic memory securing. However, it is not essential for the management object program 9 to dynamically secure the memory.

### (Modification 3)

In the first embodiment described above, the background program 2 and the management program 4 are described as different programs. However, the background program 2 and the management program 4 may be integrated into one program. Also, the management program 4 may be integrated with the OS 8.

### (Modification 4)

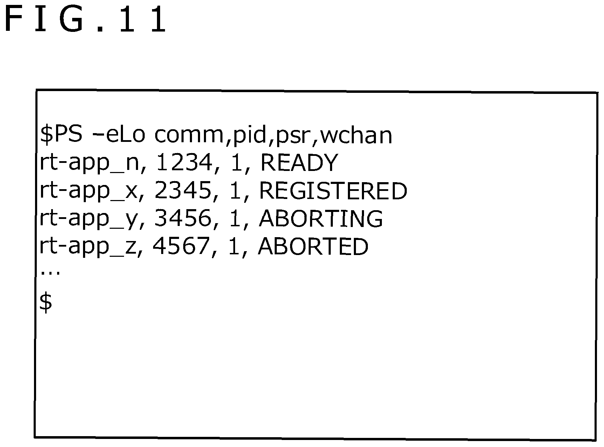

The arithmetic apparatus 1 may have an output function for a process list. FIG. 11 is a diagram illustrating a display result of process states in the arithmetic apparatus 1. In the example illustrated in FIG. 11, by additionally specifying a predetermined option to a "PS" command for outputting a process list, the process states are output on the right ends, and the states such as "REGISTERED" and "ABORTING" can be confirmed.

### -Second Embodiment-

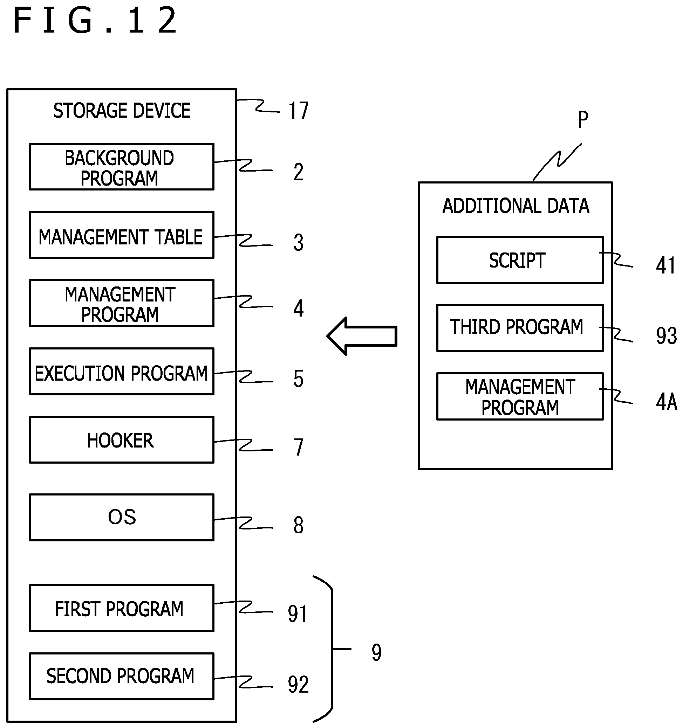

A second embodiment of the arithmetic apparatus will be described with reference to FIG. 12. In the following description, the same components as those in the first embodiment are given the same reference symbols, and differences are mainly described. Points that are not particularly described are the same as those in the first embodiment. The present embodiment differs from the first embodiment mainly in that a new management object program is added to the arithmetic apparatus.

FIG. 12 is a diagram illustrating information stored in the storage device 17 in the second embodiment. FIG. 12 illustrates that additional data P is added. This additional data P may be received via the communication device 14, or transferred via a storage medium such as a CD-ROM or a USB memory.

The additional data P added to an arithmetic apparatus 1A includes a script 41 that performs additional processing, a third program 93 that is a new management object program 9, and a management program 4A that replaces the management program 4. The script 41 is, for example, a shell script, which arranges the third program 93 and the management program 4A in the storage device 17 and updates the management table 3. The management program 4A differs from the management program 4 in that the management program 4A deals with not only the first program 91 and the second program 92 but also the third program 93.

The processing of the script 41 will specifically be described. The script 41 stores the third program 93 at a predetermined storage location in the storage device 17 and writes the absolute path of the storage location in the storage location 32 for the new record in the management table 3. For example, the script 41 sets the management number 31 of that record to be a serial number with an existing record. Further, the script 41 also overwrites the management program 4 stored in the storage device 17 with the new management program 4A.

When the new record is added to the management table 3, the background program 2 stores the binary data indicated by the storage location 32 of the new record in the RAM 13, allocates one of the temporary processes to the third program 93, and transfers the allocated process from the management core 11B to the RT core 11A. Since the subsequent processing is similar to that in the first embodiment, the description is omitted.

### (Modification 1 of Second Embodiment)

In the above-described second embodiment, the additional data P includes the management program 4A that is data replacing the management program 4. However, the additional data P may include information regarding a difference between the management program 4 and the management program 4A, and the management program 4A may be generated by using the difference information and the management program 4. Further, instead of the additional data P including the management program 4A and the third program 93 themselves, the additional data P may include a source code of the management program 4A and a source code of the third program 93. In this case, compilation and building are performed inside the arithmetic apparatus 1 to generate the management program 4A and the third program 93.

### (Modification 2 of Second Embodiment)

In the second embodiment described above, it is assumed that the management object program 9 is already stored in the storage device 17, and the storage device 17 similarly stores the background program 2, the execution program 5, and the hooker 7. However, it is not essential that the storage device 17 has the management object program 9, the background program 2, the execution program 5, and the hooker 7 in advance, and the additional data P may include the background program 2, the execution program 5, and the hooker 7.

That is, the first embodiment may be achieved by adding additional data P including the management object program 9, the background program 2, the management program 4, the execution program 5, and the hooker 7, to the arithmetic apparatus 1 operated by the OS 8. In this case, the management object program 9, the background program 2, the management program 4, the execution program 5, and the hooker 7 are included in the additional data P as source codes, and compilation and building are performed inside the arithmetic apparatus 1, so that these programs may be generated.

### (Modification 3 of Second Embodiment)

In the second embodiment described above, the generation of the additional data P and the transmission of the additional data P to the storage device 17 may be executed as a series of processes. For example, the additional data P including the generated third program 93 may be sent to the storage device 17 as an extension of the processing of compiling the third program 93.

In each of the embodiments and modifications described above, the configuration of the functional blocks is merely an example. Some functional configurations illustrated as separate functional blocks may be configured integrally, or a configuration represented by one functional block diagram may be divided into two or more functions. Further, a configuration may be adopted in which some of the functions of each functional block are provided in another functional block.

The respective embodiments and modifications described above may be combined. While various embodiments and modifications have been described above, the present invention is not limited to these contents.

### Description of Reference Symbols

1: Arithmetic apparatus
2: Background program
3: Management table
4: Management program
5: Execution program
7: Hooker
9: Management object program
11: Control device
11A: RT core
11B: Management core
14: Communication device
17: Storage device
91: First program
92: second program

## Claims

1. An arithmetic apparatus (1) comprising:
a memory (13) capable of reading and writing at high speed;
a non-volatile storage device (17) that stores an OS (8) that is an operating system not compatible with real-time processing, a management object program (9) that cannot be activated simultaneously with another management object program, a background program (2) that executes the management object program (9), and a management program (4) that manages the management object program (9); and
a central processing unit (11) that executes the OS (8), the management object program (9), the background program (2), and the management program (4), wherein:
the background program (2)
secures a management area which is an area in the memory (13),
generates one or more temporary processes by the OS (8),
stores the management object program (9) in the management area,
selects a selection process that is one of the temporary processes, and
associates the selection process with the management object program (9) stored in the management area;
the management program (4) causes the management object program (9) associated with the selection process to operate, without generating a new process, when the management program (4) receives a command to start the management object program (9); and
the selection process further acquires a part of the management area.

2. The arithmetic apparatus according to claim 1, wherein
the selection process further acquires a part of the management area in dynamic memory (13) securing processing in the management object program (9).

3. The arithmetic apparatus according to claim 1, wherein
the management program (4) recovers the management area from the selection process that is running the management object program (9), on a basis of a command to terminate the management object program (9), and then causes the OS (8) to terminate the selection process.

4. The arithmetic apparatus according to claim 1, wherein
the central processing unit (11) has a plurality of cores (11A, 11B), and
the execution of the management object program (9) and the processing of generating the temporary process by the background program (2) are executed in different cores (11A, 11B).

5. A program operating method executed by an arithmetic apparatus (1) including a memory (13) capable of reading and writing at high speed, a non-volatile storage device (17) that stores an OS (8) that is an operating system not compatible with real-time processing, a management object program (9) that cannot be activated simultaneously with another management object program, a background program (2) that executes the management object program (9), and a management program (4) that manages the management object program (9), and a central processing unit (11) that executes the OS (8), the management object program (9), the background program (2), and the management program (4), the method comprising:
by the background program (2), securing a management area which is an area in the memory, generating one or more temporary processes by the OS (8), storing the management object program (9) in the management area, selecting a selection process that is one of the temporary processes, and associating the selection process with the management object program (9) stored in the management area(13); and
by the management program (4), causing the management object program (9) associated with the selection process to operate, without generating a new process, when the management program (4) receives a command to start the management object program (9); and
by the selection process, further acquiring a part of the management area.

## Patentansprüche

1. Arithmetikvorrichtung (1), umfassend:
einen Speicher (13), der dazu in der Lage ist, mit hoher Geschwindigkeit zu lesen und zu schreiben;
eine nichtflüchtige Speichervorrichtung (17), die ein OS (8), das ein Betriebssystem ist, das nicht mit Echtzeitverarbeitung kompatibel ist, ein Verwaltungsobjektprogramm (9), das nicht gleichzeitig mit einem anderen Verwaltungsobjektprogramm aktiviert werden kann, ein Hintergrundprogramm (2), das das Verwaltungsobjektprogramm (9) ausführt, und ein Verwaltungsprogramm (4), das das Verwaltungsobjektprogramm (9) verwaltet, speichert; und
eine zentrale Verarbeitungseinheit (11), die das OS (8), das Verwaltungsobjektprogramm (9), das Hintergrundprogramm (2) und das Verwaltungsprogramm (4) ausführt, wobei:
das Hintergrundprogramm (2):
einen Verwaltungsbereich, der ein Bereich in dem Speicher (13) ist, sichert,
einen oder mehrere temporäre Prozesse durch das OS (8) generiert,
das Verwaltungsobjektprogramm (9) in dem Verwaltungsbereich speichert,
einen Selektionsprozess auswählt, der einer der temporären Prozesse ist, und
den Selektionsprozess dem in dem Verwaltungsbereich gespeicherten Verwaltungsobjektprogramm (9) zuordnet;
wobei das Verwaltungsprogramm (4) bewirkt, dass das dem Selektionsprozess zugeordnete Verwaltungsobjektprogramm (9) ausgeführt wird, ohne einen neuen Prozess zu generieren, wenn das Verwaltungsprogramm (4) einen Befehl zum Starten des Verwaltungsobjektprogramms (9) empfängt; und
wobei der Selektionsprozess ferner einen Teil des Verwaltungsbereichs erfasst.

2. Arithmetikvorrichtung nach Anspruch 1, wobei:
der Selektionsprozess ferner einen Teil des Verwaltungsbereichs in dem dynamischen Speicher (13) erfasst, der die Verarbeitung in dem Verwaltungsobjektprogramm (9) sichert.

3. Arithmetikvorrichtung nach Anspruch 1, wobei:
das Verwaltungsprogramm (4) den Verwaltungsbereich von dem Selektionsprozess, der das Verwaltungsobjektprogramm (9) ausführt, basierend auf einem Befehl zum Beenden des Verwaltungsobjektprogramms (9) wiederherstellt, und dann bewirkt, dass das OS (8) den Selektionsprozess beendet.

4. Arithmetikvorrichtung nach Anspruch 1, wobei:
die zentrale Verarbeitungseinheit (11) eine Vielzahl von Kernen (11A, 11B) aufweist und
die Ausführung des Verwaltungsobjektprogramms (9) und die Verarbeitung des Generierens des temporären Prozesses durch das Hintergrundprogramm (2) in verschiedenen Kernen (11A, 11B) ausgeführt werden.

5. Programmbetriebsverfahren, ausgeführt durch eine Arithmetikvorrichtung (1), einschließlich eines Speichers (13), der dazu in der Lage ist, mit hoher Geschwindigkeit zu lesen und zu schreiben, einer nichtflüchtigen Speichervorrichtung (17), die ein OS (8), das ein Betriebssystem ist, das nicht mit Echtzeitverarbeitung kompatibel ist, ein Verwaltungsobjektprogramm (9), das nicht gleichzeitig mit einem anderen Verwaltungsobjektprogramm aktiviert werden kann, ein Hintergrundprogramm (2), das das Verwaltungsobjektprogramm (9) ausführt, und ein Verwaltungsprogramm (4), das das Verwaltungsobjektprogramm (9) verwaltet, speichert, und einer zentralen Verarbeitungseinheit (11), die das OS (8), das Verwaltungsobjektprogramm (9), das Hintergrundprogramm (2) und das Verwaltungsprogramm (4) ausführt, wobei das Verfahren Folgendes umfasst:
Sichern eines Verwaltungsbereichs, der ein Bereich in dem Speicher ist, durch das Hintergrundprogramm (2), Generieren eines oder mehrerer temporärer Prozesse durch das OS (8), Speichern des Verwaltungsobjektprogramms (9) in dem Verwaltungsbereich, Auswählen eines Selektionsprozesses, der einer der temporären Prozesse ist, und Zuordnen des Selektionsprozesses zu dem Verwaltungsobjektprogramm (9), das in dem Verwaltungsbereich (13) gespeichert ist; und
Bewirken, dass das Verwaltungsobjektprogramm (9), das dem Selektionsprozess zugeordnet ist, betrieben wird, ohne einen neuen Prozess zu generieren, wenn das Verwaltungsprogramm (4) einen Befehl zum Starten des Verwaltungsobjektprogramms (9) empfängt, durch das Verwaltungsprogramm (4); und
ferner Erfassen eines Teils des Verwaltungsbereichs durch den Selektionsprozess.

## Revendications

1. Appareil arithmétique (1), comprenant :
une mémoire (13) capable de lire et d'écrire à grande vitesse ;
un dispositif de stockage non volatil (17) qui stocke un système d'exploitation (8) qui est un système d'exploitation, OS, non compatible avec un traitement en temps réel, un programme objet de gestion (9) qui ne peut pas être activé simultanément avec un autre programme objet de gestion, un programme d'arrière-plan (2) qui exécute le programme objet de gestion (9), et un programme de gestion (4) qui gère le programme objet de gestion (9) ; et
une unité de traitement centrale (11) qui exécute le système d'exploitation (8), le programme objet de gestion (9), le programme d'arrière-plan (2) et le programme de gestion (4), dans lequel :
le programme d'arrière-plan (2)
sécurise une zone de gestion qui est une zone dans la mémoire (13),
génère un ou plusieurs processus temporaires par l'intermédiaire de l'OS (8),
stocke le programme objet de gestion (9) dans la zone de gestion,
sélectionne un processus de sélection qui est l'un des processus temporaires, et
associe le processus de sélection au programme objet de gestion (9) stocké dans la zone de gestion ;
le programme de gestion (4) amène le programme objet de gestion (9) associé au processus de sélection à fonctionner, sans générer de nouveau processus, lorsque le programme de gestion (4) reçoit une instruction pour démarrer le programme objet de gestion (9) ; et
le processus de sélection acquiert en outre une partie de la zone de gestion.

2. Appareil arithmétique selon la revendication 1, dans lequel
le processus de sélection acquiert en outre une partie de la zone de gestion dans la mémoire dynamique (13) en sécurisant le traitement dans le programme objet de gestion (9).

3. Appareil arithmétique selon la revendication 1, dans lequel
le programme de gestion (4) récupère la zone de gestion à partir du processus de sélection qui exécute le programme objet de gestion (9), sur la base d'une instruction pour mettre fin au programme objet de gestion (9), puis amène l'OS (8) à mettre fin au processus de sélection.

4. Appareil arithmétique selon la revendication 1, dans lequel
l'unité de traitement centrale (11) présente une pluralité de noyaux (11A, 11B), et
l'exécution du programme objet de gestion (9) et le traitement de génération du processus temporaire par le programme d'arrière-plan (2) sont exécutés dans différents noyaux (11A, 11B).

5. Procédé d'exploitation de programme exécuté par un appareil arithmétique (1) incluant une mémoire (13) capable de lire et d'écrire à grande vitesse, un dispositif de stockage non volatil (17) qui stocke un OS (8) qui est un système d'exploitation non compatible avec un traitement en temps réel, un programme objet de gestion (9) qui ne peut pas être activé simultanément avec un autre programme objet de gestion, un programme d'arrière-plan (2) qui exécute le programme objet de gestion (9), et un programme de gestion (4) qui gère le programme objet de gestion (9), et une unité de traitement centrale (11) qui exécute l'OS (8), le programme objet de gestion (9), le programme d'arrière-plan (2), et le programme de gestion (4), le procédé comprenant les étapes consistant à :
par l'intermédiaire du programme de fond (2), sécuriser une zone de gestion qui est une zone dans la mémoire, générer un ou plusieurs processus temporaires par l'intermédiaire de l'OS (8), stocker le programme objet de gestion (9) dans la zone de gestion, sélectionner un processus de sélection qui est l'un des processus temporaires, et associer le processus de sélection au programme objet de gestion (9) stocké dans la zone de gestion (13) ; et
le programme de gestion (4) amène le programme objet de gestion (9) associé au processus de sélection à fonctionner, sans générer de nouveau processus, lorsque le programme de gestion (4) reçoit une instruction pour démarrer le programme objet de gestion (9) ; et
par l'intermédiaire du processus de sélection, acquérir en outre une partie de la zone de gestion.
